# FASCICULE DE BREVET EUROPEEN

(11) **EP 4 132 686 B1**
(45) Date de publication et mention de la délivrance du brevet: **10.01.2024**
(21) Numéro de dépôt: 21716202.3
(22) Date de dépôt: 02.04.2021
(51) Int. Cl.: B01D 53/77, B01D 53/62, B01D 53/96, B01D 61/44, C01F 11/18, C01B 25/32, C01D 7/00, C01F 11/46, C02F 1/469

(54) **PROCÉDÉ D'ABSORPTION DE DIOXYDE DE CARBONE ATMOSPHÉRIQUE PAR TRAITEMENT D'UN MINERAI PHOSPHATÉ**
VERFAHREN ZUR ABSORPTION VON ATMOSPHÄRISCHEM KOHLENDIOXID DURCH VERARBEITUNG EINES PHOSPHATERZES
METHOD FOR ABSORBING ATMOSPHERIC CARBON DIOXIDE BY PROCESSING A PHOSPHATE ORE

(30) Priorité: 07.04.2020 FR 2003466
(43) Date de publication de la demande: 15.02.2023
(73) Titulaire: BRGM, 45060 Orleans Cedex 2 (FR)
(72) Inventeur: MENARD, Yannick, 45160 OLIVET (FR); CLIN, François, 45000 ORLEANS (FR)
(74) Mandataire: LLR
(86) Numéro de dépôt international: PCT/EP2021/058795
(87) Numéro de publication internationale: WO 2021/204722

(56) Documents cités:
- FR-A1- 2 998 811
- HANNU-PETTERI MATTILA ET AL: "Mineral Carbonation of Phosphogypsum Waste for Production of Useful Carbonate and Sulfate Salts", FRONTIERS IN ENERGY RESEARCH, vol. 3, 16 novembre 2015 (2015-11-16), XP055762570, DOI: 10.3389/fenrg.2015.00048

## Description

### Domaine technique

La présente invention a pour objet un procédé d'absorption de dioxyde de carbone atmosphérique émis par des équipements industriels ou d'autres sources diffuses liées à l'activité humaine.

### Technique antérieure

La gestion des rejets de dioxyde de carbone industriels ou d'autres sources diffuses liées à l'activité humaine (par exemple, transport, agriculture, élevage) dans l'atmosphère et les solutions de capture et de stockage de ce dioxyde de carbone émis par les activités humaines est un des enjeux écologiques et économiques majeurs des années à venir.

Les solutions actuelles dans le cas des installations industrielles, et notamment des centrales thermiques de production d'électricité et de chauffage à combustible fossile, visent à capturer ces rejets directement à la source. Toutefois la complexité du traitement de volumes considérables d'effluents gazeux concentrés conduit à un coût économique et énergétique peu attractif. FR 2998811 (Clin et al) et WO2012/085552 (Hendawl) décrivent un procédé combinant la désalinisation d'eau de mer pour la production d'eau potable et la capture de gaz à effet de serre (GDH) tel que le dioxyde de carbone (CO₂). Le dispositif comprend une cellule électrochimique permettant la séparation ionique de sels dissous dans l'eau. Les ions alcalins, par exemple Na⁺, sont extraits de la cellule grâce à une membrane et mis en contact avec le GDH pour obtenir du carbonate de sodium et du chlorure de sodium qui sont alors séquestrés. Dans WO2012/085552 les contres-ions des ions alcalins, sont extraits et les sous-produits acides ainsi obtenus sont utilisés à des fins commerciales. US 2013/0195747 - KENDALL - porte sur un dispositif permettant de capturer du CO₂ et d'obtenir un composé, en particulier un composé utilisable comme matériau de construction, en contactant une eau chargée en CO₂ avec du sulfate de calcium pour obtenir un carbonate de calcium qui peut être entreposé. Les sous-produits acides produits peuvent être utilisés dans la production de plastiques. (XP055762570) Hannu Petteri et al. - Frontiers in Energy Research - 2015 - pp. 1-8 décrit un procédé d'absorption de CO₂ atmosphérique et de production de monohydrate de phosphate monocalcique Ca(H₂PO₄)₂*H₂O.

La présente invention vise à proposer un procédé d'absorption du dioxyde de carbone atmosphérique respectueux de l'environnement et permettant la valorisation de déchets de production.

L'invention a donc pour objet un procédé d'absorption du dioxyde de carbone atmosphérique par carbonatation indirecte des résidus sulfatés (phosphogypse) résultant du traitement de minerais de phosphate.

### Description de l'invention

Procédé d'absorption de dioxyde de carbone atmosphérique et de production de monohydrate de phosphate monocalcique **caractérisé** en ce que ce procédé comprend :
- une étape de dissociation ionique par électrodialyse d'une solution de sulfate de sodium (Na₂SO₄) produisant séparément de l'eau dessalée, une solution de soude et une solution d'acide sulfurique ;
- une étape d'absorption de dioxyde de carbone atmosphérique par sa mise en contact avec ladite solution de soude et qui résulte en la formation d'une solution de carbonate de sodium ;
- une étape de production de phosphogypse (Ca₂SO₄*2H₂O) et de monohydrate de phosphate monocalcique (ou superphosphate double) à partir d'un minerai de phosphate comprenant de l'apatite par mélange de ladite apatite et dudit acide sulfurique en milieu aqueux ;
- une étape de traitement de ladite solution de carbonate de sodium par ledit phosphogypse produisant une solution aqueuse de sulfate de sodium et du carbonate de calcium ;
où ladite solution de sulfate de sodium ainsi produite est utilisée pour ladite étape de dissociation ionique et où ladite solution d'acide sulfurique produit lors de ladite étape de dissociation ionique est utilisée dans l'étape de production de phosphogypse et de monohydrate de phosphate monocalcique (engrais).

On comprend bien que le procédé permet de capturer du dioxyde de carbone indépendamment de ses sources concentrées ou diffuses et de séquestrer du dioxyde de carbone atmosphérique par l'intermédiaire de carbonate de calcium.

Selon une variante préférée du procédé ladite étape de dissociation ionique est effectuée par un réacteur d'électrodialyse à membrane bipolaire.

Selon une variante préférée du procédé l'étape d'absorption est effectuée par une colonne à film tombant ou un absorbeur gaz-liquide de type colonne à bulles.

Selon une variante préférée du procédé ladite apatite est choisie dans le groupe constitué de l'hydroxyapatite, la fluorapatite, la chlorapatite et de leurs mélanges. Selon une variante préférée du procédé où ledit phosphogypse comprend des substances minérales choisies dans le groupe constitué par des éléments radioactifs, des terres rares des métaux et leurs mélanges, ledit procédé comprenant, en outre, une étape d'isolation, d'extraction et/ou de récupération de substances minérales.

Selon une variante préférée du procédé ledit minerai de phosphate est un minerai de phosphate carbonaté ayant subi au préalable une étape de décarbonatation.

Selon une variante préférée du procédé ladite étape de décarbonatation comprend une étape de traitement thermique du minerai de phosphate carbonaté, ladite étape produisant du minerai traité thermiquement, de la chaux et un gaz comprenant du monoxyde de carbone, ledit gaz pouvant alors avantageusement être piégé par réaction avec ladite solution de soude, de préférence dans un absorbeur de type colonnes à bulles.

Selon une variante préférée du procédé ledit minerai traité thermiquement, subit subséquemment une étape de séparation mécanique, de préférence par cyclonage, hydrocyclonage, séparation densimétrique et/ou classification, ladite étape de séparation mécanique produisant un minerai décarbonaté et de la chaux vive et, après extinction de ladite chaux vive, de l'hydroxyde de calcium, et où ledit procédé comprend avantageusement une étape de capture de dioxyde de carbone atmosphérique par carbonatation dudit hydroxyde de calcium précédemment obtenu.

Selon une variante préférée du procédé ladite étape de capture de dioxyde de carbone atmosphérique par carbonatation dudit hydroxyde de calcium comprend une étape de déversement de celui-ci dans des bassins de lagunage à l'air libre.

### Description détaillée de l'invention

Le procédé d'absorption de dioxyde de carbone atmosphérique comporte une étape de dissociation ionique par électrodialyse d'une solution de sulfate de sodium (Na₂SO₄) produisant séparément de l'eau dessalée, une solution de soude et une solution d'acide sulfurique. L'équation réactionnelle de cette première étape se résume en

Na₂SO₄ + 2 H₂O ⇔ H₂SO₄ + 2 NaOH (I)

La solubilité dans l'eau du sulfate de sodium (Na₂SO₄) est de l'ordre de 40 g L-1 à 0°C. Une solution de préférence concentrée de sulfate de sodium peut servir à alimenter une électrodialyse comme par exemple un réacteur d'électrodialyse à membrane bipolaire. La réaction d'électrodialyse permet de produire de l'eau pure, de l'acide sulfurique (H₂SO₄) et de la soude (hydroxyde de sodium NaOH). Cette électrodialyse est avantageusement alimentée en électricité produite par exploitation de sources d'énergies renouvelables (photovoltaïque, éolien, géothermie ...) et en particulier non fossile. La soude produite à l'étape (I) est alors utilisée dans une étape d'absorption, par exemple, dans un réacteur à film circulant, pour absorber le CO₂ atmosphérique par sa mise en contact avec ladite solution de soude selon au moins l'une des réactions :

2 NaOH + CO₂ ⇔ Na₂CO₃(s) + H₂O (II)

NaOH + CO₂ ⇔ NaHCO₃(s) + H₂O (II bis)

qui résulte en la formation d'une solution de carbonate(s) de sodium (Na₂CO₃ et/ou NaHCOs). La prévalence d'une de ces formes de carbonates dépend du pH de la solution. Aussi le plus souvent la solution de carbonate comprend-elle un mélange de ces formes et est une solution de carbonates.

Le procédé selon l'invention comprend une étape de production de phosphogypse (Ca₂SO₄*2H₂O) et de monohydrate de phosphate monocalcique (Ca(H₂PO₄)₂ à partir du mélange d'un minerai de phosphate comprenant une apatite et de l'acide sulfurique produit à l'étape (I) en milieu aqueux. L'équation réactionnelle de cette première étape se résume en :

Ca₁₀(PO₄)₆(OH,F,Cl)₂ + 7 H₂SO₄ + 17 H₂O ⇔ 3 Ca(H₂PO₄)₂*H₂O + 7 CaSO₄*2H₂O + 2 H(OH, F, CI) (III)

L'apatite Ca₁₀(PO₄)₆(OH,F,Cl)₂ est un minéral phosphaté, qui comprend généralement l'hydroxyapatite, la fluorapatite et la chlorapatite, avec de fortes concentrations d'ions OH-, F- et CI-, respectivement, dans le cristal. L'apatite utilisée dans le procédé de l'invention est de préférence choisie dans le groupe constitué de l'hydroxyapatite, la fluorapatite, la chlorapatite et de leurs mélanges. De manière préférentielle l'apatite comprend de la fluoroapatite, ou est constitué principalement de fluoroapatite.

Le monohydrate de monocalcium phosphate Ca(H₂PO₄)₂·H₂O, ou monohydrate de phosphate monocalcique ou encore superphosphate double, est le minéral principal des engrais phosphatés qui sont largement utilisés dans le domaine de l'agriculture.

Le phosphogypse est le précipité solide du sulfate de calcium hydraté, produit lors du traitement de l'apatite. Le phosphogypse est généralement considéré comme un déchet de la production d'engrais.

Le procédé selon l'invention comprend une étape de traitement de la solution de carbonate de sodium produite à l'étape (II) par le phosphogypse produit à l'étape (III) de manière à obtenir une solution aqueuse de sulfate de sodium et du carbonate de calcium selon la réaction quantitative :

CaSO₄ + Na₂CO₃ ⇔ CaCO₃ + Na₂SO₄ (IV)

Le carbonate de calcium précipité est séparé et peut être stocké.

La solution de sulfate de sodium ainsi produite est utilisée pour l'étape de dissociation ionique permettant la capture de CO₂ et l'acide sulfurique produit est recyclé dans l'étape de production de phosphogypse et de monohydrate de phosphate de calcium. Ce procédé est donc un procédé cyclique où le déchet de production de monohydrate de monophosphate calcique, c'est-à-dire le phosphogypse, est lui aussi recyclé et sert à séquestrer le CO₂ atmosphérique par production de calcite CaCOs (calcaire). En outre, selon un aspect particulièrement avantageux du procédé de l'invention, il est possible lors de la réaction (IV), de libérer des substances minérales piégées dans le phosphogypse telles que l'uranium, du thorium des terres rares et autres espèces métalliques d'intérêt économique. Aussi selon un aspect préféré, le procédé selon l'invention comprend une étape d'isolation, d'extraction ou de récupération de ces substances minérales, avantageusement suivi d'une étape de purification.

De préférence, le minerai de phosphate utilisé dans l'invention provient de gisements naturels et est notamment extraites dans des carrières. Le minerai de phosphate extrait de ces carrières est, le plus souvent, carbonaté. Aussi, le procédé selon l'invention comprend de préférence une étape préalable de décarbonatation du minerai de phosphate. Cette étape de décarbonatation peut comprendre une étape où le carbonate de calcium est séparé du reste du minerai par des séparations mécaniques (cyclonage, séparation densimétrique, classification, hydrocyclonage, etc.).

Il est cependant préféré que cette étape de décarbonatation du minerai soit effectuée par un procédé où le minerai, broyé si nécessaire, contenant de l'apatite et du carbonate de calcium est soumis à un traitement thermique. Le dispositif permettant ce traitement est de préférence un four et avantageusement un four solaire. Le traitement thermique permet la calcination des roches calcaires contenant du carbonate de calcium, et la production du dioxyde de carbone et d'oxyde de calcium (chaux vive). Généralement, pour la calcination de roches calcaires, la température à utiliser peut varier de 600°C à 900°C.

Le dioxyde de carbone émis par la calcination est avantageusement capturé par absorption dans un absorbeur de type colonne à bulles alimenté en NaOH venant de l'électrodialyse.

On utilisera de préférence un système de recueil et captation des gaz de calcination qui ne les diluent pas : le CO₂ ainsi capturé est hautement concentré. Selon une autre variante de l'invention, notamment en vue de lutter contre l'acidification des océans, l'oxyde de calcium (chaux vive) émis par la calcination peut être directement injecté en mer.

En outre, on peut envisager de modifier des équipements industriels produisant de la chaux vive (CaO) aux fins du présent procédé.

Le minerai de phosphate et la chaux vive (CaO) produite par traitement thermique sont séparés par voie mécanique. Cette séparation peut être réalisée en voie sèche par des techniques séparatives telles que la classification, la séparation densimétrique ou le cyclonage ou en voie humide, après hydratation de la chaux vive en chaux éteinte (Ca(OH)₂) et séparation solide-liquide du phosphate de la chaux éteinte par hydrocyclonage. Dans ce dernier cas, la réaction d'hydratation étant fortement exothermique, on prévoira avantageusement d'utiliser la chaleur produite pour alimenter un échangeur de chaleur et réaliser une conversion en énergie électrique ou encore pour préchauffer le dispositif de calcination.

Il est alors possible d'effectuer la capture de dioxyde de carbone atmosphérique par carbonatation de l'hydroxyde de calcium précédemment obtenu et formation de carbonate de calcium. La cinétique de cette réaction de carbonatation de l'hydroxyde de chaux en milieux aqueux permet d'assurer un processus industriel de réabsorption. La réaction sera conduite de préférence par lagunage, c'est-à-dire dans des bassins ou lagune artificielle de faible profondeur (moins d'un mètre, préférentiellement moins d'une vingtaine de centimètres) renfermant la solution d'hydroxyde de calcium.

Selon une variante de l'invention, la chaux vive produite par décarbonatation du minerai et séparée du phosphate au moyen d'un traitement en voie sèche, peut être utilisée par l'industrie cimentière comme source de calcium non carbonatée directement utilisable dans les fours à clinker.

Selon une autre variante de l'invention, le carbonate de calcium produit selon le procédé de l'invention peut se substituer en tout ou partie au calcaire extrait de carrières d'où est extrait le minerai de phosphate. On comprend aussi que le carbonate de calcium ainsi produit peut être aussi valorisé économiquement dans les industries de la construction notamment.

Le procédé selon l'invention sera avantageusement mis en oeuvre au travers d'installations industrielles basées à proximité à la fois de gisements naturels de phosphate.

Une installation, ou un dispositif, d'absorption de dioxyde de carbone atmosphérique et de production de monohydrate de phosphate monocalcique permettant de mettre en oeuvre le procédé ici décrit est **caractérisé** en ce qu'il comprend :
- un réacteur d'électrodialyse d'une solution de sulfate de sodium produisant séparément de l'eau dessalée, une solution de soude et une solution d'acide sulfurique ;
- un absorbeur de dioxyde de carbone atmosphérique permettant sa mise en contact avec ladite solution de soude et la formation d'une solution de carbonate de sodium ;
- un premier mélangeur pour la production de phosphogypse (Ca₂SO₄*2H₂O) et de monohydrate de phosphate monocalcique ; et
- un second mélangeur pour la production de carbonate de calcium par mélange ladite solution de carbonate de sodium et de phosphogypse ;
où ledit réacteur d'électrodialyse est en communication fluide avec lesdits absorbeur et premier et second mélangeur, ledit second mélangeur étant en outre en communication fluide avec ledit absorbeur, et ledit premier mélangeur.

Le réacteur d'électrodialyse comprend de préférence un électrodialyseur à membrane bipolaire
L'absorbeur de dioxyde de carbone atmosphérique comprend de préférence une colonne à film tombant ou une colonne à bulle.

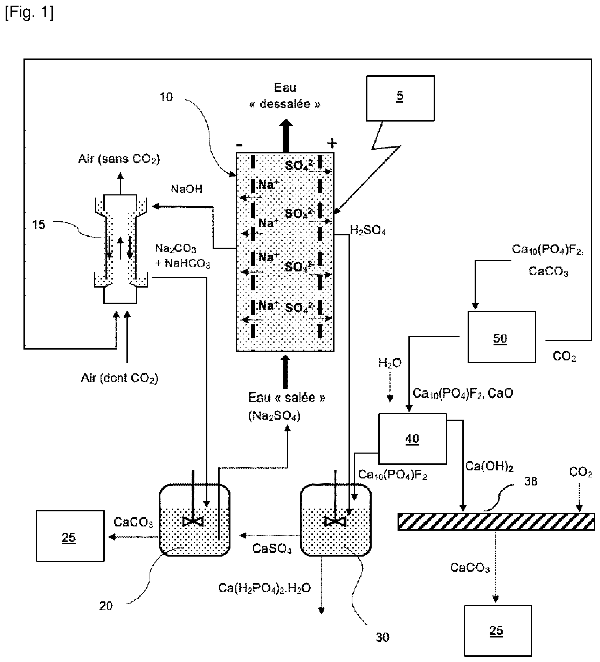

L'installation peut également comprendre un four solaire et/ou un bassin de lagunage. D'autres avantages et caractéristiques ressortiront mieux de la description qui va suivre, donnée à titre d'exemple non limitatif, d'une variante d'exécution particulièrement préférée de la présente invention, en référence à la figure 1.

### Brève description de la figure

[Fig. 1] la figure 1 est un diagramme récapitulatif d'un exemple particulièrement préféré de mise oeuvre d'un dispositif mettant en oeuvre le procédé de l'invention.

### Exemple de mise en œuvre de l'invention

Un réacteur d'électrodialyse 10 permet une étape de dissociation ionique d'une solution de sulfate de sodium en ion Na⁺ et SO4²⁻. Le réacteur 10 est de préférence un réacteur à membrane bipolaire de type connu par l'homme de métier. Ce réacteur est alimenté en énergie électrique par une source d'électricité décarbonée 5 (ou renouvelable) telle qu'une source photovoltaïque, éolienne, géothermique, nucléaire, etc. Le réacteur 10 est alimenté en solution de sulfate de sodium provenant du réacteur 20. Le réacteur d'électrodialyse produit séparément de l'eau dessalée, une solution de soude et une solution d'acide sulfurique.

La solution de soude alimente un absorbeur de dioxyde de carbone qui peut être, dans ce mode de réalisation, une colonne à film tombant ou un absorbeur de type colonne à bulles 15. Cette colonne à film tombant 15 est essentiellement formée par un récipient en forme d'un cylindre vertical. La solution de soude forme un mince film qui s'écoule sur la paroi interne du cylindre. Le courant d'air atmosphérique contenant du CO₂ (phase continue) est injecté à partir du bas de la colonne 15 et s'écoule en son centre. Lors de l'ascension de l'air le processus d'absorption du CO₂ a lieu à l'interface gaz-liquide et la solution de soude se charge en carbonates de sodium. L'absorbeur de type colonne à bulles 15 est de type réacteur cylindrique connu par l'homme du métier au sein de laquelle le CO₂ généralement pur, ou fortement concentré, provenant de l'étape de décarbonatation thermique 50, est injecté sous la forme de fines bulles. La mise en contact du CO₂ gazeux et de la solution de soude conduit à la production d'une solution de carbonates de sodium. Cette solution de carbonates de sodium est alors conduite dans le réacteur 20 où elle est mise en présence de phosphogypse, dans des conditions standard permettant la précipitation de carbonate de calcium. Le carbonate de calcium (calcaire) peut alors être entreposé et stocké de manière écologique et en respectant l'environnement. Le milieu liquide du réacteur 20 est alors chargé en sulfate de sodium qui peut être retourné vers le réacteur d'électrolyse 10 pour séparation ionique. L'acide sulfurique produit par l'électrolyse est utilisé pour la préparation de phosphogypse et d'engrais. L'acide sulfurique est mis en présence de minerai de phosphate (apatite) dans le réacteur 30 ce qui produit du phosphogypse et du monohydrate de phosphate monocalcique (cf. réaction III). Ce phosphate est récupéré et peut être commercialisé en tant qu'engrais. Le phosphogypse est, quant à lui, utilisé pour la capture du dioxyde de carbone dans le réacteur 20. La réaction d'attaque acide du minerai de phosphate produit également du fluorure d'hydrogène (gazeux) qui réagit avec la silice du minerai pour former de l'acide fluosilicique (H₂SiF₆). La partie gazeuse qui s'échappe est capté par lavage à l'eau pour former de l'acide fluorhydrique. L'acide fluosilicique est séparé de l'acide phosphorique par un procédé simple de précipitation. Selon un aspect particulièrement préféré de l'invention, le minerai phosphaté comprenant de l'apatite provient d'un minerai brut contenant une large proportion de de calcite (où carbonate de calcium (CaCOs)), qui a été décarbonaté. Ces minerais sont les plus abondants sur la planète. Cette décarbonatation peut être avantageusement effectuée de manière à limiter, et de préférence, éviter totalement, une libération de CO₂ dans l'atmosphère. Ainsi dans le schéma de la figure 1, une méthode particulièrement préférée est exemplifiée. Selon cette méthode le minerai, broyé si nécessaire, contenant de l'apatite et du carbonate de calcium est soumis à un traitement thermique, de préférence dans un four solaire (50). Le four thermique solaire (50) est de type bien connu et comprend une série de miroirs ajustables (héliostats) réfléchissant les rayons solaires vers un miroir parabolique. Le miroir parabolique permet de concentrer les rayons solaires vers un foyer. Le traitement thermique à lieu à une température permettant de décarboner partiellement le carbonate de calcium en le transformant en chaux vive, c'est-à-dire en oxyde de calcium (CaO), ce qui dégage du CO₂ sous forme très concentrée et produit un flux de CO₂ pur d'origine minérale sans émission de CO₂ d'origine organique (provenant d'une étape de combustion).

Le dioxyde de carbone sous cette forme concentrée dirigé vers le réacteur d'absorption 15 où il réagit avec la soude NaOH pour former une solution de carbonates de calcium. Une fois le traitement thermique terminé la chaux vive peut être soit séparée de la fluorapatite en voie sèche par traitement mécanique (classification, séparation densimétrique, cyclonage) soit désactivée (extinction) en la mélangeant à de l'eau ce qui la transforme en, portlandite, ou hydroxyde de calcium Ca(OH)₂, selon la réaction :

CaO(s) + H₂O(I) = CaOH₂(s) (V)

La portlandite néoformée, où hydroxyde de calcium, est alors séparée de l'apatite par hydrocyclonage (comme pratiqué classiquement). De manière particulièrement avantageuse, la portlandite peut être déversée dans des bassins de lagunage à l'air libre (38) et permettre ainsi la capture/séquestration minérale de CO₂ atmosphérique par carbonatation de la portlandite selon la réaction :

CaOH₂(s) + CO₂(g) = CaCOs(s) + H₂O(I) (VI)

Le carbonate de calcium ainsi obtenu peut être retourné dans des sites de stockages (25).

La fluoapatite obtenue à la suite du cyclonage est alors transférée dans le réacteur 30 pour l'étape d'obtention de phosphogypse et d'engrais phosphaté, tel que décrit cidessus.

Cette variante du procédé selon l'invention nécessitant de grandes surfaces d'échanges pour le transfert gazeux du CO₂ atmosphérique vers les bassins de lagunage 38 de chaux éteinte ainsi que pour la production d'électricité d'origine renouvelable, les bassins de lagunage 38 peuvent être recouverts de panneaux photovoltaïques. Ainsi, de manière avantageuse ces surfaces peuvent exercer une double fonction (séquestration minérale et production d'électricité « verte » permettant d'alimenter le réacteur d'électrodialyse 10).

Comme les produits de réactions mises en jeu dans le procédé peuvent devenir les réactifs des réactions suivantes, il est recommandé de mettre en place des systèmes de purge pour extraire les polluants qui s'accumuleraient dans le dispositif. Il est de même recommandé d'ajouter un système de compensation de ces purges par des ajouts d'eau fraiche. De telles dispositifs sont bien connus et à la portée de l'homme du métier.

L'invention n'est pas limitée aux modes de réalisation présentés et d'autres modes de réalisation apparaîtront clairement à l'homme du métier.

## Revendications

1. Un procédé d'absorption de dioxyde de carbone atmosphérique et de production de monohydrate de phosphate monocalcique **caractérisé en ce que** ce procédé comprend :
- une étape de dissociation ionique par électrodialyse d'une solution de sulfate de sodium produisant séparément de l'eau dessalée, une solution de soude et une solution d'acide sulfurique ;
- une étape d'absorption de dioxyde de carbone atmosphérique par sa mise en contact avec ladite solution de soude ce qui résulte en la formation d'une solution de carbonate de sodium ;
- une étape de production de phosphogypse et de monohydrate de phosphate monocalcique à partir d'un minerai de phosphate comprenant une apatite ;
- une étape de traitement de ladite solution de carbonate de sodium par ledit phosphogypse produisant une solution aqueuse de sulfate de sodium et du carbonate de calcium ;
où ladite solution de sulfate de sodium ainsi produite est utilisée pour ladite étape de dissociation ionique et où ladite solution d'acide sulfurique produite lors de ladite étape de dissociation ionique est utilisée dans l'étape de production de phopshogypse et de monohydrate de phosphate monocalcique.

2. Le procédé selon la revendication 1, où ladite étape de dissociation ionique est effectuée par un réacteur d'électrodialyse à membrane bipolaire.

3. Le procédé selon la revendication 1 ou 2, où l'étape d'absorption est effectuée par une colonne à film tombant ou un absorbeur gaz-liquide de type colonne à bulles.

4. Le procédé selon l'une quelconque des revendications 1 à 3, où ladite apatite est choisie dans le groupe constitué de l'hydroxyapatite, la fluorapatite, la chlorapatite et de leurs mélanges.

5. Le procédé selon l'une quelconque des revendications 1 à 4, où ledit phosphogypse comprend des substances minérales choisies dans le groupe constitué par des éléments radioactifs, des terres rares des métaux et leurs mélanges, ledit procédé comprenant, en outre, une étape d'isolation, d'extraction et/ou de récupération de substances minérales.

6. Le procédé selon l'une quelconque des revendications 1 à 4, où ledit minerai de phosphate est un minerai de phosphate carbonaté ayant subi au préalable une étape de décarbonatation.

7. Le procédé selon la revendication 6, où ladite étape de décarbonatation comprend une étape de traitement thermique du minerai de phosphate carbonaté, ladite étape produisant du minerai traité thermiquement, de la chaux et un gaz comprenant du monoxyde de carbone, ledit gaz pouvant alors avantageusement être piégé par réaction avec ladite solution de soude, de préférence dans un absorbeur de type colonnes à bulles.

8. Le procédé selon la revendication 7, où ledit minerai traité thermiquement, subit subséquemment une étape de séparation mécanique, de préférence par cyclonage, hydrocyclonage, séparation densimétrique et/ou classification, ladite étape de séparation mécanique produisant un minerai décarbonaté et de la chaux vive et, après extinction de ladite chaux vive, de l'hydroxyde de calcium, et où ledit procédé comprend avantageusement une étape de capture de dioxyde de carbone atmosphérique par carbonatation dudit hydroxyde de calcium précédemment obtenu.

9. Le procédé selon la revendication 8, où ladite étape de capture de dioxyde de carbone atmosphérique par carbonatation dudit hydroxyde de calcium comprend une étape de déversement de celui-ci dans des bassins de lagunage à l'air libre (38).

## Patentansprüche

1. Verfahren zur Absorption von atmosphärischem Kohlendioxid und zur Herstellung von Monocalciumphosphatmonohydrat, **dadurch gekennzeichnet, dass** das Verfahren Folgendes umfasst:
- einen Schritt der lonendissoziation durch Elektrodialyse einer Natriumsulfatlösung, wobei getrennt entsalztes Wasser, eine Sodalösung und eine Schwefelsäurelösung erzeugt werden;
- einen Schritt der Absorption von atmosphärischem Kohlendioxid, indem es mit der Sodalösung in Kontakt gebracht wird, wodurch eine Natriumcarbonatlösung gebildet wird;
- einen Schritt zur Herstellung von Phosphorgips und Monocalciumphosphatmonohydrat aus einem Phosphaterz, das Apatit enthält;
- einen Schritt zur Behandlung der Natriumcarbonatlösung mit dem Phosphorgips, wobei eine wässrige Natriumsulfatlösung und Calciumcarbonat entstehen; wobei die so erzeugte Natriumsulfatlösung für den Schritt der lonendissoziation verwendet wird und wobei die in dem Schritt der lonendissoziation erzeugte Schwefelsäurelösung in dem Schritt zur Herstellung von Phosphorgips und Monocalciumphosphatmonohydrat verwendet wird.

2. Verfahren nach Anspruch 1, wobei der Schritt der lonendissoziation durch einen Elektrodialysereaktor mit bipolarer Membran durchgeführt wird.

3. Verfahren nach Anspruch 1 oder 2, wobei der Absorptionsschritt durch eine Fallfilmkolonne oder einen Gas-Flüssigkeits-Absorber vom Typ Blasensäule durchgeführt wird.

4. Verfahren nach einem der Ansprüche 1 bis 3, wobei der Apatit aus der Gruppe ausgewählt ist, die aus Hydroxylapatit, Fluorapatit, Chlorapatit und Mischungen davon besteht.

5. Verfahren nach einem der Ansprüche 1 bis 4, wobei der Phosphorgips Mineralstoffe aufweist, die aus der Gruppe ausgewählt sind, die aus radioaktiven Elementen, seltenen Erden, Metallen und Gemischen davon besteht, wobei das Verfahren außerdem einen Schritt der Isolierung, Extraktion und/oder Rückgewinnung von Mineralstoffen umfasst.

6. Verfahren nach einem der Ansprüche 1 bis 4, wobei das Phosphaterz ein karbonatisiertes Phosphaterz ist, das zuvor einem Entkarbonatisierungsschritt unterzogen wurde.

7. Verfahren nach Anspruch 6, wobei der Entkarbonatisierungsschritt einen Schritt der Wärmebehandlung von karbonatisiertem Phosphaterz umfasst, wobei der Schritt wärmebehandeltes Erz, Kalk und ein Kohlenmonoxid umfassendes Gas erzeugt, wobei das Gas dann vorteilhafterweise durch Reaktion mit der Sodalösung, vorzugsweise in einem Absorber vom Blasensäulentyp, eingefangen werden kann.

8. Verfahren nach Anspruch 7, wobei das wärmebehandelte Erz anschließend einem mechanischen Trennschritt unterzogen wird, vorzugsweise durch Zyklonieren, Hydrozyklonieren, densimetrische Trennung und/oder Klassierung, wobei der mechanische Trennschritt ein entkarbonatisiertes Erz und Branntkalk und nach Löschen des Branntkalks Calciumhydroxid erzeugt, und wobei das Verfahren vorteilhafterweise einen Schritt zum Aufnehmen von atmosphärischem Kohlendioxid durch Karbonatisierung des zuvor erhaltenen Calciumhydroxids umfasst.

9. Verfahren nach Anspruch 8, wobei der Schritt des Aufnehmens von atmosphärischem Kohlendioxid durch Karbonatisierung des Kalziumhydroxids einen Schritt des Einleitens desselben in Freiluft-Lagunenbecken (38) umfasst.

## Claims

1. A process for the absorption of atmospheric carbon dioxide and the production of monocalcium phosphate monohydrate **characterized in that** said process comprises:
- an ionic dissociation step by electrodialysis of a sodium sulphate solution which produces separately desalinated water, a solution of sodium hydroxide and a solution of sulphuric acid;
- a step wherein atmospheric carbon dioxide is absorbed by contacting it with said sodium hydroxide solution, thus resulting in the formation of a sodium carbonate solution;
- a step for the production of phosphogypsum and monocalcium phosphate monohydrate from a phosphate ore which comprises apatite;
- a step for treating said sodium carbonate solution with said phosphogypsum thus producing an aqueous solution of sodium sulphate and calcium carbonate;
wherein said sodium sulphate solution so produced is used for said ionic dissociation step and wherein said sulphuric acid solution produced in said ionic dissociation step is used in the production step of phopshogypsum and monocalcium phosphate monohydrate.

2. The method of claim 1, wherein said ion dissociation step is carried out by a bipolar membrane electrodialysis reactor.

3. The method according to claim 1 or 2, wherein the absorption step is carried out using a falling film column or a gas-liquid absorber of the bubble column type.

4. The process according to any one of claims 1 to 3, wherein said apatite is selected from the group consisting of hydroxyapatite, fluorapatite, chlorapatite and mixtures thereof.

5. The process according to any one of claims 1 to 4, wherein said phosphogypsum comprises mineral substances selected from the group consisting of radioactive elements, rare earths, metals and mixtures thereof, said process further comprising, in addition, a step for insulating, extracting and/or recovering mineral substances.

6. The process according to any one of claims 1 to 4, wherein said phosphate ore is a carbonate phosphate ore which has previously undergone a decarbonation step.

7. The process according to claim 6, wherein said decarbonation step comprises a heat treatment step of the carbonate phosphate ore, said step producing heat-treated ore, lime and a gas comprising carbon monoxide, said gas then advantageously being able to be trapped by reaction with said sodium hydroxyde solution, preferably in a bubble column-type absorber.

8. The process according to claim 7, wherein said heat-treated ore subsequently undergoes a mechanical separation step, preferably by cycloning, hydrocycloning, densimetric separation and/or classification, said mechanical separation step producing decarbonated ore and quicklime and, after quenching said quicklime, calcium hydroxide, and wherein said process advantageously comprises a step of capturing atmospheric carbon dioxide by carbonation of said previously obtained calcium hydroxide.

9. The method according to claim 8, wherein said step of capturing atmospheric carbon dioxide by carbonation of said calcium hydroxide comprises a step of discharging said hydroxide into open-air lagoon basins (38).
